# EUROPÄISCHE PATENTANMELDUNG

(11) **EP 1 075 975 A2**
(43) Veröffentlichungstag der Anmeldung: **14.02.2001**
(21) Anmeldenummer: 00113871.8
(22) Anmeldetag: 30.06.2000
(51) Int. Cl.: B60J 10/12, B60J 10/08

(54) **Dichtungselement, insbesondere in einer Seiten- oder Dachöffnung eines Kraftfahrzeugs**

(30) Priorität: 12.08.1999 DE 19937642
(71) Anmelder: CTS Fahrzeug-Dachsysteme GmbH, 21079 Hamburg (DE)
(72) Erfinder: Raisch, Dieter, 71277 Rutesheim (DE)
(74) Vertreter: Müller, Gottfried

(57) **Zusammenfassung**

Ein Dichtungselement, insbesondere ein Dichtungselement in einer Seiten- oder Dachöffnung eines Kraftfahrzeugs, ist zumindest über einen Teil seiner Dichtungsoberfläche (11) mit einer geräuschhemmenden Beschichtung (12) versehen.

Um das Dichtungselement mit hoher Dichtigkeit auszubilden, ist die Beschichtung (12) zweigeteilt und weist zwei getrennte Abschnitte (13,14) mit einer zwischenliegenden Durchbrechung (15) auf.

## Beschreibung

Die Erfindung betrifft ein Dichtungselement, insbesondere in einer Seiten- oder Dachöffnung eines Kraftfahrzeugs, nach dem Oberbegriff des Anspruches 1.

Derartige Dichtungselemente, die beispielsweise in der Druckschrift DE 196 27 912 A1 beschrieben werden, werden in Seitenrahmen für Seitenfenster oder in Dachöffnungen für Schiebedächer, Faltdächer, Hardtops oder Lamellendächer eingesetzt, um in Schließstellung des Fensters bzw. Daches eine wasser- und winddichte Abdichtung des Fahrzeuginnenraumes zu erhalten. Die Dichtungselemente müssen eine ausreichende Nachgiebigkeit aufweisen, damit in Schließstellung die Kante der Fensterscheibe bzw. die Kante eines Dachelements in der Dachöffnung mit ausreichender Dichtkraft gegen das Dichtelement gepreßt werden kann. Zur Verbesserung der Dichtungswirkung sind üblicherweise zusätzliche konstruktive Maßnahmen am Dichtungselement vorgesehen, beispielsweise mit Formschluß ineinandergreifende Dichtungsabschnitte.

Ein weiteres, balgförmig ausgebildetes Dichtungselement, das eine umschlossene Hohlkammer aufweist und in Schießstellung von einem Dachelement beaufschlagt und zusammengedrückt wird, ist aus der Druckschrift DE 42 33 507 C1 bekannt. Eine vergleichbare Dichtungsanordnung geht auch aus der DE 41 29 860 C1 hervor.

Neben der Gestaltung der Querschnittsgeometrie können die Eigenschaften eines Dichtungselements auch durch eine auf die Dichtungsoberflache aufgebrachte Beschichtung beeinflußt werden. Zur verbesserten Geräuschhemmung ist auf die Oberfläche des Dichtungselements der DE 196 27 912 A1 eine flockig aufgebaute Beschichtung aufgeklebt, die aus einem sich von dem Dichtungselement unterscheidenden Material besteht. Über die Auswahl der Beschichtung kann eine gezielte Beeinflussung der gewünschten Eigenschaften des Dichtungselementes vorgenommen werden.

Hierbei kann das Problem auftreten, dass die Beschichtung sich negativ auf die Dichtungseigenschaften des Dichtungselements auswirkt. Insbesondere bei einer verhältnismäßig flockig aufgebauten Beschichtung, über die sich eine Geräuschreduzierung und eine Reibungsminderung erreichen läßt, können aufgrund der in der Beschichtung eingeschlossenen kanalähnlichen Zwischenräume Kapillareffekte auftreten, welche zur Folge haben, dass Wasser über die Beschichtung in den Fahrzeuginnenraum geleitet wird.

Der Erfindung liegt das Problem zugrunde, beschichtete Dichtungselemente mit hoher Dichtigkeit auszubilden.

Dieses Problem wird erfindungsgemäß mit den Merkmalen des Anspruches 1 gelöst.

Gemäß der Neuerung ist die Beschichtung in zwei Abschnitte unterteilt, zwischen denen eine Durchbrechung angeordnet ist. Diese Durchbrechung zwischen den Beschichtungsabschnitten bewirkt eine Unterbrechung der Kapillarwirkung in der Beschichtung, wodurch verhindert wird, dass Feuchtigkeit aufgrund von Kapillarkräften zwischen den Abschnitten ausgetauscht wird. Insbesondere bei einer Anwendung in Kraftfahrzeugen wird dadurch vermieden, dass die Feuchtigkeit aus dem Bereich der Fahrzeugaußenseite in den Fahrzeuginnenraum geleitet wird. Durch die Zweiteilung der Beschichtung bleiben sowohl die Dichtungseigenschaften des Dichtungselementes als auch die dämpfenden, reibungsmindernden oder sonstigen Eigenschaften der Beschichtung erhalten.

Ein weiter Vorteil der erfindungsgemäßen Ausführung des Dichtungselementes liegt darin, dass aufgrund der Durchbrechung zwischen den Beschichtungsabschnitten der Spannungsverlauf im Dichtungselement von der Beschichtung unbeeinträchtigt bleibt. Die Beschichtung selbst ist dadurch geringeren Belastungen und geringerem Verschleiß ausgesetzt, außerdem bleibt das ursprüngliche elastische Verhalten des Dichtungselements erhalten.

In einer zweckmäßigen Ausführung ist vorgesehen, dass zumindest ein Beschichtungsabschnitt vollständig innerhalb und/oder vollständig außerhalb des an der Dichtungsanordnung teilnehmenden und in Dichtstellung das Dichtelement beaufschlagenden Bauteils angeordnet ist, wodurch eine Flüssigkeitssperre zwischen den beiden Seiten des angrenzenden Bauteils gebildet wird. Die Durchbrechung kann hierbei auf die Breite des eingreifenden Bauteiles - beispielsweise ein Fenster oder ein Dachelement - angepaßt werden, so dass die entsprechende Kante des Bauteils in Schließstellung in der Durchbrechung aufgenommen ist. In dieser Ausführung ist in optimaler Weise eine Separierung des innenliegenden vom außenliegenden Beschichtungsabschnitt gewährleistet.

Es kann vorteilhaft sein, die Oberfläche des Dichtungselements im Bereich der Durchbrechung mit einer Nut zu versehen, welche insbesondere konkav geformt sein kann, wodurch einerseits eine eingreifende Kante eines Fensters oder eines Dachteils gut aufgenommen und auch teilweise umfaßt wird und andererseits Feuchtigkeit, welche sich am Nutgrund abgesetzt hat, in Richtung des nächstliegenden Randes eines Beschichtungsabschnittes abgeleitet wird.

Weitere Vorteile und zweckmäßige Ausführungsformen sind den weiteren Ansprüchen, der Figurenbeschreibung und den Zeichnungen zu entnehmen. Es zeigen:
- Fig. 1: eine perspektivische Ansicht eines zwischen Öffnungs- und Schließposition verstellbaren Fahrzeugdachs,
- Fig. 2: einen Ausschnitt eines Dichtungselements mit einer auf zwei Abschnitte verteilten Beschichtung auf der Oberfläche des Dichtungselements, wobei zwischen den Abschnitten eine Durchbrechung liegt,
- Fig. 3: eine Fig. 2 entsprechende Darstellung mit einer Nut auf der Dichtungsoberfläche im Bereich der Durchbrechung,
- Fig. 4: eine Fig. 2 entsprechende Darstellung, wobei die Dichtungsoberfläche im Bereich der Durchbrechung Erhebungen aufweist.

In sämtlichen folgenden Ausführungsbeispielen sind gleiche Bauteile mit gleichen Bezugszeichen versehen.

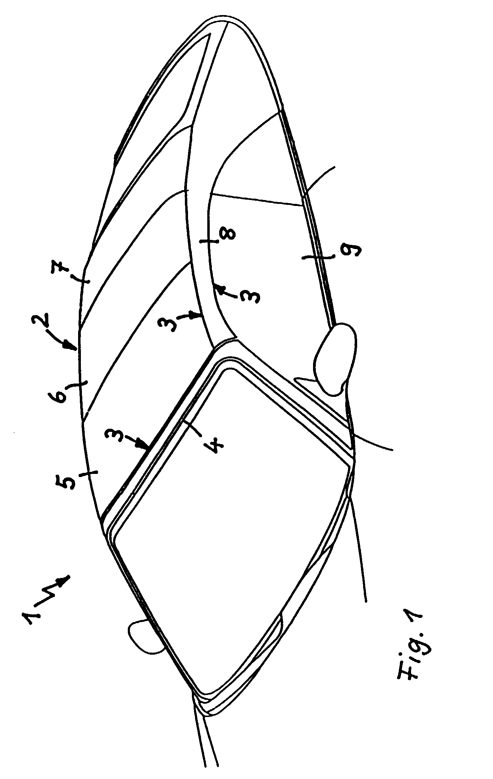

Das in Fig. 1 dargestellte Fahrzeugdach 2 eines Kraftfahrzeugs 1 umfasst ein verstellbares Verdeck, das zwischen der in Fig. 1 gezeigten Schließstellung, in der der Fahrzeuginnenraum überdeckt ist, in eine den Fahrzeuginnenraum freigebende Öffnungsstellung verlagerbar ist.

Für einen wasser- und winddichten Abschluß zwischen karosseriefesten Fahrzeugteilen und beweglichen Fahrzeugteilen sind Dichtungsanordnungen 3 vorgesehen, welche sich insbesondere im Übergangsbereich zwischen Windschutzscheibenrahmen 4 und einem vorderen, beweglichen Dachelement 5, zwischen dem vorderen bzw. weiteren Dachelementen 5, 6, 7 und einem Seitenrahmen 8 sowie zwischen dem Seitenrahmen 8 und einer Seitenscheibe 9 befinden.

Die Dichtungsanordnungen 3 umfassen ein oder mehrere Dichtungselemente, welche entweder karosserieseitig oder mit einem verstellbaren Bauteil verbunden sind, sowie das jeweilige mit dem Dichtungselement zusammenwirkende Bauteil, das in Dichtstellung das Dichtungselement beaufschlagt, wodurch ein wind- und wasserdichten Abschluß geschaffen wird.

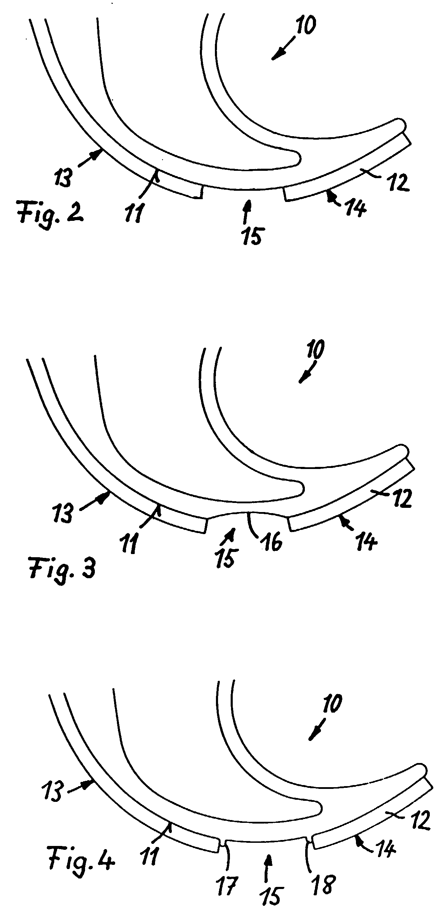

In den Fig. 2 bis 4 sind verschiedene Ausführungsvarianten für Dichtungselemente 10 dargestellt. Jedes Dichtungselement 10 ist auf seiner Dichtungsoberfläche 11 ganz oder teilweise mit einer Beschichtung 12 versehen, die als geflocktes Gewebe ausgebildet ist, welches insbesondere aus Polyester besteht, und die aufgrund des geflockten Aufbaus geräuschdämmend und reibungsreduzierend wirkt. Die geflockte Beschichtung 12 kann als Alternative zu einer Gleitlack-Beschichtung eingesetzt werden. Die Beschichtung 12 befindet sich insbesondere in demjenigen Abschnitt auf der Dichtungsoberfläche 11 des Dichtungselements 10, welcher in Dichtstellung mit dem dazugehörenden Fahrzeugbauteil zusammenwirkt.

Die Beschichtung 12 ist in zwei getrennte und beabstandete Abschnitte 13, 14 unterteilt, zwischen denen eine Durchbrechung 15 liegt, die in den Ausführungsbeispielen als Lücke mit einer definierten Breite zwischen den Beschichtungsabschnitten 13 und 14 ausgebildet ist.

Es kann gegebenenfalls aber auch zweckmäßig sein, anstelle einer Lücke ein Trennelement als Durchbrechung zwischen den benachbarten Beschichtungsabschnitten anzuordnen. Als derartiges Trennelement kann beispielsweise eine Trennwand aus einem wasserundurchlässigen Material eingesetzt werden. Bei Verwendung eines wasserundurchlässigen Trennelements können die Beschichtungsabschnitte gegebenenfalls auch unmittelbar an das Trennelement angrenzen.

Die in den Ausführungsbeispielen 2 bis 4 dargestellten, als Lücke ausgeführten Durchbrechungen 15 bewirken den Effekt, dass eine Kapillarwirkung in der Beschichtung 12, welche eine definierte Dicke aufweist, entlang der Dichtungsoberfläche 11 unterbrochen ist. Feuchtigkeit, welche an einer Stelle in die Beschichtung 12 eindringt und durch die Kapillarwirkung sich in einem der Beschichtungsabschnitte ausbreitet, kann wegen der Durchbrechung 15 sich nicht in den benachbarten Beschichtungsabschnitt fortpflanzen. Die Durchbrechung hat die Funktion einer Feuchtigkeits- bzw. Wassersperre.

Wird das Dichtungselement 10 als Teil einer Dichtungsanordnung eingesetzt, so greift zweckmäßig in Schließstellung das mit dem Dichtungselement 10 zusammenwirkende Bauteil genau in die Durchbrechung 15 ein, wobei die Breite der Durchbrechung 15 auf die Dicke des eingreifenden Bauteils abgestimmt sein kann oder aber die Dicke des eingreifenden Bauteils über- oder unterschreiten kann. Darüber hinaus kann es aber auch angezeigt sein, das eingreifende Bauteil in Schließstellung nur zu einem Teil in die Durchbrechung 15 einzuführen und zum anderen Teil mit einem der Beschichtungsabschnitte 13 oder 14 in Überdeckung zu bringen. In dieser Ausführung kann die Breite der Lücke bzw. Durchbrechung 15 die Dicke des eingreifenden Bauteils unterschreiten, so lange sichergestellt ist, dass der Kapillarfluss zwischen Fahrzeugaußenseite und Fahrzeuginnenraum durch das vollständig oder teilweise in die Durchbrechung 15 einragende Bauteil unterbrochen ist.

Im Ausführungsbeispiel gemäß Fig. 3 ist die als Lücke ausgeführte Durchbrechung 15 im Bereich der Dichtungsoberfläche 11 mit einer Nut 16 versehen, welche zweckmäßig konkav geformt ist und sich in Richtung des Dichtungskörpers des Dichtungselements 10 auswölbt. Die Nut 16 bietet den Vorteil, dass ein in der Dichtungsanordnung mit dem Dichtungselement zusammenwirkendes Bauteil, welches vollständig oder zumindest teilweise in die Durchbrechung 15 eingreift bzw. einragt, durch die Wölbung des Nutbodens sicher aufgenommen und gehalten ist.

Im Ausführungsbeispiel gemäß Fig. 4 sind im Bereich der Durchbrechung 15 sickenförmige Erhebungen 17 und 18 zweckmäßig einteilig mit dem Dichtungskörper des Dichtungselementes 10 ausgebildet. Die Erhebungen 17, 18 begrenzen den seitlichen Rand der Durchbrechung 15 und bilden Anschläge für die bis zu den Erhebungen 17, 18 reichenden Beschichtungsabschnitte 13, 14. Die Erhebungen 17, 18 können außerdem in Dichtstellung der Dichtungsanordnung den Halt des in die Durchbrechung 15 einragenden Bauteils unterstützen.

## Patentansprüche

1. Dichtungselement, insbesondere in einer Seiten- oder Dachöffnung eines Kraftfahrzeugs, wobei zumindest ein Teil der Dichtungsoberfläche (11) des Dichtungselements (10) mit einer geräuschhemmenden Beschichtung (12) versehen ist,
**dadurch gekennzeichnet,**
dass die Beschichtung (12) zweigeteilt ist und zwei getrennte Abschnitte (13, 14) mit einer zwischenliegenden Durchbrechung (15) aufweist.

2. Dichtungselement nach Anspruch 1,
**dadurch gekennzeichnet,**
dass die Durchbrechung (15) als Lücke zwischen den benachbarten Abschnitten (13, 14) der Beschichtung (12) ausgebildet ist.

3. Dichtungselement nach Anspruch 1 oder 2,
**dadurch gekennzeichnet,**
dass das Dichtungselement (10) Bestandteil einer Dichtungsanordnung (3) ist, wobei das mit dem Dichtungselement (10) in Dichtstellung zusammenwirkende Bauteil (4, 5, 6, 7, 8, 9) die Durchbrechung (15) teilweise oder vollständig beaufschlagt.

4. Dichtungselement nach Anspruch 3,
**dadurch gekennzeichnet,**
dass das Dichtungselement (10) in Dichtstellung in der Weise von dem Bauteil (4, 5, 6, 7, 8, 9) beaufschlagt ist, dass ein Abschnitt (13, 14) der Beschichtung (12) in Dichtstellung vollständig auf einer Seite des Bauteils (4, 5, 6, 7, 8, 9) liegt.

5. Dichtungselement nach einem der Ansprüche 1 bis 4,
**dadurch gekennzeichnet,**
dass in die Dichtungsoberfläche (11) im Bereich der Durchbrechung (15) eine Nut (16) eingebracht ist.

6. Dichtungselement nach Anspruch 5,
**dadurch gekennzeichnet,**
dass die Nut (16) konkav geformt ist.

7. Dichtungselement nach einem der Ansprüche 1 bis 6,
**dadurch gekennzeichnet,**
dass die Dichtungsoberfläche (11) im Bereich der Durchbrechung (15) eine oder mehrere Erhebungen (17, 18) aufweist.

8. Dichtungselement nach Anspruch 7,
**dadurch gekennzeichnet,**
dass eine Erhebung (17, 18) unmittelbar an einen Abschnitt (13, 14) der Beschichtung (12) angrenzt.

9. Dichtungselement nach einem der Ansprüche 1 bis 8,
**dadurch gekennzeichnet,**
dass die Beschichtung (12) aus einem Polyestergewebe besteht.
